# EUROPÄISCHE PATENTANMELDUNG

(11) **EP 1 610 491 A1**
(43) Veröffentlichungstag der Anmeldung: **28.12.2005**
(21) Anmeldenummer: 04014615.1
(22) Anmeldetag: 22.06.2004
(51) Int. Cl.: H04L 9/32

(54) **Verfahren zur Dokumentation wenigstens einer Verifikation an einem analogen oder digitalen Dokument sowie Herstellung eines derartigen Dokumentes**

(71) Anmelder: Mediasec Technologies GmbH, 45127 Essen (DE)
(72) Erfinder: Krüger, Roland, 46325 Borken (DE); Koch, Eckard, Dr., 45147 Essen (DE)
(74) Vertreter: Rösler, Uwe

(57) **Zusammenfassung**

Beschrieben wird ein Verfahren zum Dokumentieren wenigstens einer Verifikation, die an einem mit einer elektronischen Signatur versehenen Dokument, das in digitaler oder analoger Form vorliegt und einen semantischen Informationsgehalt aufweist, durchgeführt wird, wobei die elektronische Signatur sowie der semantische Informationsgehalt des Dokumentes in eine digitale Datenstruktur zusammengefasst werden, die der Verifikation unterzogen wird, bei der ein Verifikationsprotokoll erstellt wird, das der digitalen Datenstruktur hinzugefügt wird.

Ferner wird ein Verfahren zur Erzeugung eines gegen Manipulation geschützten, wenigstens mit einer elektronischen Signatur versehenen, wenigstens eine lesbare semantische Information enthaltenden, lesbaren analogen oder digitalen Dokumentes beschrieben.

Das Verfahren zeichnet sich durch folgende Verfahrensschritte aus:
- Erzeugen von die semantische Information nach Art, Anordnung und/oder optischem Erscheinungsbild beschreibenden Darstellungsdaten,
- Kodieren der Darstellungsdaten unter Bildung eines so genannten Layoutcodes sowie Integrieren des Layoutcodes in das Dokument,
- Erstellen der elektronischen Signatur auf Basis von wenigstens Teilen der semantischen Information sowie wenigstens Teilen des Layoutcodes und Integrieren der elektronischen Signatur in das Dokument.

## Beschreibung

### Stand der Technik

Im Lichte des seit dem Jahre 2001 in Deutschland in Kraft befindlichen Gesetzes über Rahmenbedingungen für elektronische Signaturen, das so genannte Signaturgesetz, sowie der ebenfalls im Jahre 2001 in Kraft getretenen Verordnung zur elektronischen Signatur, die sogenannte Signaturverordnung (SigV), sind gesetzliche Grundlagen zur amtlichen Anerkennung von auf elektronischem Wege an einen Empfänger zustellbaren Dokumente aller Art geschaffen worden. Ein zentraler Aspekt, der den sehr umfangreichen Regelungen zugrunde liegt, betrifft die Nachweisbarkeit der Integrität eines über elektronischem Wege übersandten Dokumentes. Aus einem die Grundsätze zum Datenzugriff und zur Prüfbarkeit digitaler Unterlagen (GDPdU) betreffenden BMF-Schreiben vom 16.07.2001 ist hierzu die Regelung zu entnehmen, dass der Empfänger eines auf elektronischem Wege erhaltenen Dokumentes verpflichtet ist, dieses entsprechend zu verifizieren und zu archivieren.

Eine bekannte Technologie, die der nachweisbaren Integrität auf elektronischem Wege übermittelter Dokumente dient, stellt das sogenannte Signatursiegelverfahren dar, das in einem Beitrag von Roland Krüger auf dem 8. deutschen IT-Sicherheitskongress des BSI im Februar 2004 erläutert worden ist und zu dem nähere Einzelheiten unter folgender Internet-Adresse zu finden sind: www.mediasec.de\downloads\veröffentlichungen\krüger2003a.pdf.

Das vorstehend bezeichnete Signatursiegelverfahren läßt sich vornehmlich bei elektronischen Textdokumenten einsetzen, die unter Verwendung sogenannter elektronischer Signaturen trotz Umwandeln in eine analoge Form, beispielsweise mittels Ausdruck auf Papierform, integritätsgeschützt bleiben, d.h. eventuelle Manipulationen am Textinhalt können auch am analogen Ausdruck nachgewiesen werden. Hierzu wird der Textinhalt bzw. die semantischen Informationen des elektronischen Dokumentes mit einer elektronischen Signatur versehen und eine aus Dokumenteninhalt und elektronischer Signatur bestehende Datenstruktur, ein sogenannter Signaturcontainer, gebildet. Je nach Vertrauensniveau lassen sich unterschiedlich qualifizierte Signaturen einsetzen, wobei typische Signaturtechniken die Implementierung einer elektronischen Signatur in eine Siegelgrafik unter Verwendung an sich bekannter steganographischer Verfahren, wie beispielsweise die digitale Wasserzeichentechnik, vorsehen.

Gilt es beispielsweise ein mit einem Signatursiegel versehenes Papierdokument zu verifizieren, so wird zunächst der Signaturcontainer aus dem re-digitalisierten Papierausdruck rekonstruiert und anschließend der elektronische Signaturcontainer mit einer externen Verifikationskomponente überprüft. Ist bei der Übertragung des elektronischen Dokumentes kein Medienbruch vorhanden, so kann der Signaturcontainer am Ort des Empfängers direkt einer externen Verifikationskomponente zugeführt werden. Beispielsweise kann es sich bei der Verifikationskomponente um einen externen Verifikationsdienst handeln, der alle für eine Signaturprüfung relevanten Daten, wie beispielsweise Verzeichnisdienstabfragen oder Sperrlisten bereitstellt. Je nach Bedarf können diese Daten sowie das Prüfergebnis zudem archiviert werden, wie es insbesondere beim Empfang elektronisch übermittelter Rechnungen die vorstehend zitierten gesetzlichen Forderungen vorsehen. Insbesondere die Archivierung und Nachweisbarkeit von bereits durchgeführten Überprüfungen bzw. Verifikationen an auf elektronischem Wege übermittelten Dokumente wirft auf Seiten des Empfängers einen hohen Organisationsaufwand auf, der insbesondere mit einer systematischen Abspeicherung von einzelnen elektronischen Dokumenten mit jeweils getrennt zugeordneten Verifikationsdateien verbunden ist.

### Darstellung der Erfindung

Es besteht daher die Aufgabe ein Verfahren zum Dokumentieren wenigstens einer Verifikation, die an einem mit einer elektronischen Signatur versehenen Dokument, das in digitaler oder analoger Form vorliegt und einen semantischen Informationsgehalt aufweist, durchgeführt wird, derart weiterzubilden, dass das Verifikationsereignis sowie -ergebnis vom Empfänger des verifizierten Dokumentes möglichst einfach unter Vermeidung einer umständlichen Archivierungssystematik zu archivieren ist. Ferner gilt es ein Verfahren anzugeben, mit dem die Integrität digitaler oder analoger Dokumente, die vorzugsweise auf elektronischem Wege übermittelt werden bzw. worden sind, zu verbessern, d.h. den Schutz vor unerlaubten Manipulationen am digitalen oder analogen Dokument zu optimieren.

Die Lösung der erfindungsgemäßen Aufgabe ist im Anspruch 1 angegeben. Gegenstand des Anspruches 10 ist ein Verfahren zur Erzeugung eines gegen Manipulation geschützten, wenigstens mit einer elektronischen Signatur versehenen, wenigstens eine lesbare semantische Information enthaltenden, lesbaren analogen oder digitalen Dokumentes. Den Erfindungsgedanken vorteilhaft weiterbildende Merkmale sind Gegenstand der Unteransprüche sowie im Weiteren unter Bezugnahme auf die Ausführungsbeispiele zu entnehmen.

Das Verfahren gemäß dem Oberbegriff des Anspruches 1 zeichnet sich dadurch aus, dass die elektronische Signatur sowie der semantische Informationsgehalt des Dokumentes in eine digitale Datenstruktur, vorzugsweise in Form eines Signaturcontainers, zusammen gefasst werden, wobei die elektronische Signatur sowie der semantische Informationsgehalt des Dokumentes unter Heranziehung externer Verifikationskomponenten verifiziert und ein Verifikationsprotokoll erstellt wird, das der digitalen Datenstruktur hinzugefügt wird, so dass letztlich die digitale Datenstruktur eine datensatzspezifische Entität darstellt, in der die elektronische Signatur, der semantische Informationsgehalt aber insbesondere auch das Verifikationsprotokoll, das vorzugsweise in einer Prüf- und Archivdatei abgespeichert wird, enthalten ist. Dem Empfänger des verifizierten Dokumentes liegen somit alle Prüfdaten in Form des Verifikationsprotokolls vor, die gemeinsam mit dem semantischen Informationsgehalt sowie der elektronischen Signatur durch bloßes Abspeichern des erstellten Signaturcontainers archiviert und zu einem späteren Zeitpunkt wieder abgefragt werden können.

Der Archivierungsaufwand reduziert sich somit auf ein einfaches Abspeichern einer einzigen Datenstruktur, gleichsam dem Abspeichern eines per email erhaltenen Word-Dokumentes, jedoch sind in der erfindungsgemäß zusammengesetzten Datenstruktur alle von Seiten des Gesetzes geforderten Informationen, die an amtlich akzeptierbare Dokumente zu stellen sind, enthalten.

Das erfindungsgemäße Verfahren läßt sich nicht nur an rein digital vorliegenden Dokumenten, die bspw. mittels Computerfax- oder E-Mail-Versand an einen Empfänger übermittelt werden, sondern auch an analogen Dokumenten anwenden, wie Papierausdrucken oder auf einem Monitor lesbar darstellbaren Graphikdateien (bspw. PDF-, GIF- oder TIFF-Dateien). Aus Gründen einer verlustfreien Umwandlung eines rein digital vorliegenden Dokumentes in eine analoge, lesbare Form wird hierzu die im Dokument integrierte elektronische Signatur in einer maschinenlesbaren Form, vorzugsweise als 2D-Barcode, überführt und dargestellt. In gleicher Weise wird das in der Archiv- und Prüfdatei abgespeicherte Verifikationsprotokoll, vorzugsweise als 2D-Barcode, auf dem analogen Dokument in lesbarer Form dargestellt, das zu Zwecken einer späteren Überprüfbarkeit mittels eines Barcodelesegerätes in die digitale Form zurück transformiert werden kann. Somit ist es dem Empfänger überlassen, in welcher Form er ein an ihn über elektronischem Wege zugestelltes Dokument gesetzeskonform archiviert. In beiden Fällen, ob in digitaler oder analoger Form des Dokumentes, gilt es lediglich eine leicht hand zuhabende Dateneinheit (einen Signaturcontainer oder einen Papierausdruck) entsprechend abzuspeichern bzw. abzulegen.

Zur Erstellung der elektronischen Signatur gilt es die hohen Sicherheitsstandards, die durch das Signaturgesetz sowie die Signaturverordnung vorgegeben sind, zu beachten. Hierzu sollte die die elektronische Signatur erstellende Einheit einen privaten Signaturschlüssel besitzen, wobei zusätzlich die Sicherheit bei der Erstellung der elektronischen Signatur durch eine Prüfung sowie Bestätigung in Form eines Zertifikates zu belegen ist. In vorteilhafter Weise wird bei der Erstellung einer elektronischen Signatur über den zu signierenden Inhalt des Dokumentes, d.h. den semantischen Informationsgehalt oder wenigstens Teile von diesem, ein sogenannter Hashwert gebildet, wobei die Hashwertbildung sowie die Signaturerstellung aus Sicherheitsgründen untrennbar miteinander verknüpft sind und somit in einem zusammenhängenden Vorgang durchzuführen sind. Dies kann beispielsweise von einer hierfür autorisierten Person oder einer Organisationseinheit durchgeführt werden.

Wie bereits erwähnt werden zur besseren Handhabung und sicheren Übermittlung eines jeweils in digitaler Form vorliegenden Dokumentes die elektronische Signatur sowie der semantische Informationsgehalt des Dokuments in eine gemeinsame digitale Datenstruktur, dem so genannten Signaturcontainer zusammengefaßt, der grundsätzlich in dieser Form an eine bestimmt ausgewählte Destination übermittelt wird. Da jedoch eine Vielzahl von Empfängern eines derartig digital vorliegenden Dokumenten nicht in der Lage sind, die Integrität der Dokumente zu überprüfen sowie entsprechend zu archivieren, weil beispielsweise der Empfänger aus organisatorischen Gründen die Aufbewahrung der übermittelten Dokumente in analoger Form als Papierausdruck weiterverarbeitet und entsprechend archiviert und im übrigen über keine weiteren technischen Hilfsmittel verfügt, die eine entsprechende Verifikation ermöglichen, erlaubt das erfindungsgemäße Verfahren auch in diesem Fall eine gesetzeskonforme Nutzung derartiger Dokumente. So kann vor Zustellung eines mit einer elektronischen Signatur versehenen Dokumentes an den Empfänger durch einen externen Verifikationsdienst eine Überprüfung der Integrität des jeweiligen digitalen Dokumentes vorgenommen werden, wobei der als Intermediär bezeichnete Verifikationsdienst die elektronische Signatur des digitalen Dokumentes überprüft und einen zusätzlichen Datensatz erstellt, in dem das Verifikationsergebnis protokolliert wird. Hierbei stellt der Intermediär die für die Verifikation eingesetzten kryptographischen Prüfschlüssel sowie die angewandten Gültigkeitsaussagen, die im Wege einer sogenannten Online-Status-Abfrage mittels OCSP-Statusabfrage erfolgt, zur Verfügung. Jegliche mit der Verifikation in Verbindung stehenden Informationen werden in einem Prüf- und Archivierungsdatensatz zusammengefügt und gemeinsam mit der elektronischen Signatur sowie dem semantischen Informationsgehalt des Dokumentes in einem einheitlichen Signaturcontainer zusammengefaßt, der dem Empfänger übermittelt wird. Somit liegen dem Empfänger alle Prüfdaten über die vorgenommene Verifikation sowie Informationen zum digitalen Dokument vor, die er bei Bedarf zur lokalen Überprüfung oder weiteren Online-Abfrage verwenden kann. Selbst im Falle einer analogen Umwandlung des empfangenen digitalen signierten und verifizierten Dokumentes durch Ausdruck auf Papierform bleiben die sicherheitsrelevanten Informationen zur weiteren Archivierung und Überprüfung erhalten, zumal neben den in lesbarer Form darstellbaren semantischen Informationen auch die elektronische Signatur sowie das in der Prüf- und Archivdatei abgespeicherte Verifikationsprotokoll in einer lesbaren Form auf dem Papierausdruck dargestellt wird, vorzugsweise in Form eines 2D-Barcodes, so dass der analog vorliegende Dokumentenausdruck auch weiterhin, wie gesetzlich gefordert, maschinell auswertbar bleibt.

Durch die erfindungsgemäße Zusammenführung aller relevanten Informationen bezüglich eines digital vorliegenden Dokumentes in eine einzige Datenstruktur in Form eines Signaturcontainers ist es sowohl für den Dokumentenaussteller sowie auch für den Dokumentenempfänger möglich, elektronische sowie auch papiergebundene Dokumente zu übermitteln sowie zu archivieren und somit unabhängig von der Technik und Ausstattung des jeweiligen Empfängers die mit der Übersendung digitaler Dokumente verbundenen Einsparpotentiale sowie die erhöhte Zustellgeschwindigkeit zu nutzen.

Ein weiterer sehr wesentlicher Aspekt beim Versand digitaler Dokumente auf elektronischem Wege betrifft die Sicherheit gegenüber nicht autorisierten Manipulationen an Form und Inhalt der digitalen Dokumente. Letztlich dient die vorstehend beschriebene Integritätsprüfung, die durch die gesetzlich geforderte Verifikation durch den Empfänger selbst oder einem von dem Empfänger bestimmten Verifikationsdienst vorzunehmen ist, der Überprüfung bzw. dem Aufdecken möglicher am digitalen Dokument vorgenommenen, unautorisierten Manipulationen. Das im Weiteren beschriebene Verfahren dient dem verbesserten Schutz gegenüber Manipulationen am digital vorliegenden Dokument und verleiht somit der Integritätsprüfung einer verbesserten Überprüfungsqualität. In aller Regel verfügt der semantische Informationsgehalt eines Dokumentes über strukturierte, alphanumerisch darstellbare Informationen bzw. Daten, die sich nach Art, Anordnung sowie nach ihrem optischen Erscheinungsbild bei der Überführung in eine lesbare Form voneinander unterscheiden. Um das digital vorliegende Dokument in eine lesbare Form überführen zu können, beispielsweise in digitaler Form als PDF- oder TIFF-Dokument oder in analoger Form als Papierausdruck, bedarf es sogenannter Layoutinformationen, nach denen der semantische Informationsgehalt des Dokumentes beispielsweise auf einem DIN A4-Format angeordnet und dargestellt werden kann. Derartige Layoutinformationen können beispielsweise in Form sogenannter XML-Schemata dargestellt werden. Selbstverständlich sind auch andere Datentypen beschreibende Darstellungsformen, wie beispielsweise DTD (Dokumenten Typ Definitionen), einsetzbar, um den semantischen Informationsgehalt des digitalen Dokumentes optisch darstellbar und interpretationsfähig zu machen.

Die in generischer Form vorliegenden Layoutinformationen, beispielsweise in Form eines als XML-Style-Sheets genannten XML-Schemas, werden zur weiteren Verarbeitung in einen Layoutcode umgewandelt, der in einer lesbaren Form in das Dokument implementiert wird. In vorteilhafter Weise läßt sich der Layoutcode als 2D-Layout-Barcode darstellen. Im Weiteren wird vor dem Erstellen der elektronischen Signatur über den Layout-Barcode eine Prüfsumme (bspw. ein Hashwert) gebildet, die beim Erstellen der elektronischen Signatur berücksichtigt wird. In einem letzten Schritt gilt es schließlich, die auf die vorstehende Weise gewonnene elektronische Signatur in das Dokument zu integrieren.

Durch die erfindungsgemäße Vorgehensweise ist der Layout-Barcode untrennbar mit wenigstens Teilen des semantischen Informationsgehaltes sowie der elektronischen Signatur verknüpft, so dass jegliche Manipulationen am Layout-Barcode selbst bzw. an der Zuordnung einzelner semantischer Informationsgehalte zu einzelnen strukturierten Datenfeldern bei der Signaturprüfung aufgedeckt werden können. Für die Rekonstruktion des Signaturumfanges bedarf es allerdings bei der Signaturprüfung der Berechnung der Prüfsumme bzw. des Hashwertes über den Layout-Barcode.

Wie im vorstehenden Fall werden zur Übermittlung eines in digitaler Form vorliegenden Dokumentes, das in der vorstehenden Weise elektronisch signiert ist, die elektronische Signatur, der semantische Informationsgehalt sowie der Layoutcode in einem gemeinsamen Signaturcontainer zusammenfaßt und entsprechend übermittelt, so dass der Empfänger keinerlei datenverarbeitungstechnische Zusatzaufwendungen für eine entsprechende Archivierung hat.

Im Weiteren wird unter Bezugnahme auf konkrete Ausführungsbeispiele, die den Versand sowie Empfang elektronischer Rechnungen zum Gegenstand haben, der vorstehend beschriebene Erfindungsgedanke näher erläutert, ohne dabei den allgemeinen Erfindungsgedanken, der sich auf jegliche Art digitaler sowie analoger Dokumente anwenden lässt, zu beschränken.

### Kurze Beschreibung der Erfindung

Es zeigen:
- Fig. 1: schematisierte Darstellung zur Erstellung, Übermittlung und Weiterverarbeitung elektronisch übersandter Rechnungen, sowie
- Fig. 2: schematisierte Darstellung zur Rechnungserstellung und Übermittlung einer Rechnung mit Layoutinformationen, sowie
- Fig. 3: Gesamtprozess zur Rekonstruktion eines übermittelten elektronischen Signaturcontainers inklusive Prüf- und Archivdaten.

Die folgenden Ausführungsbeispiele veranschaulichen die Erstellung sowie den Versand elektronischer Rechnungen an einen Rechnungsempfänger, wobei die eingangs erwähnten gesetzlichen Bestimmungen voll umfänglich berücksichtigt werden.

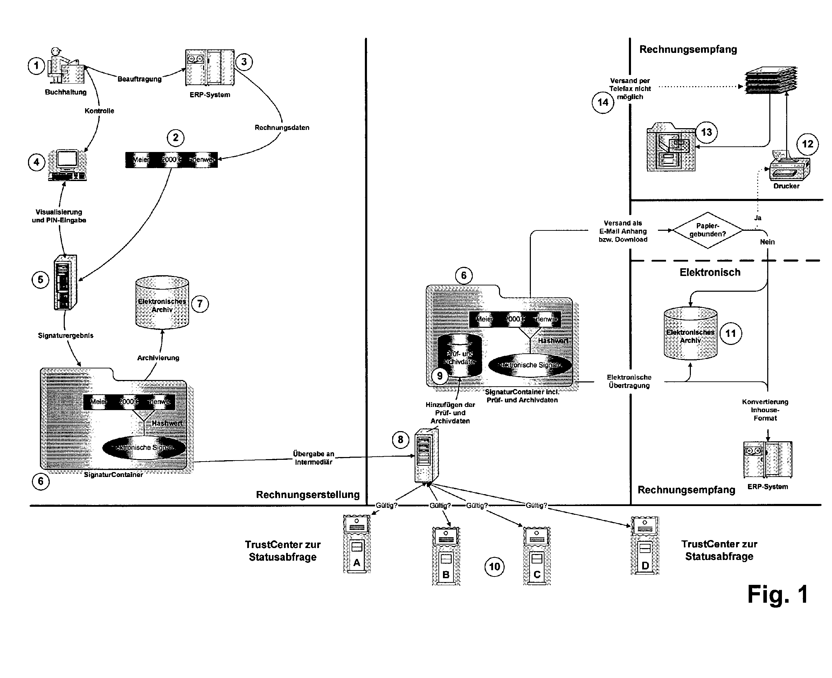

Zur Rechnungserstellung wird gemäß Figur 1 in aller Regel durch eine unternehmensinterne Buchhaltung 1 ein Rechnungsauftrag erstellt, in dem ein empfänger-spezifischer Rechnungsinhalt festgelegt wird, im Folgenden als semantischer Informationsgehalt 2 bezeichnet, der in aller Regel über ein sogenanntes ERP-System 3 (Enterprise Resource Planning) zur Verfügung gestellt wird. Durch Freischaltung 4 eines privaten Signaturschlüssels mittels Eingabe einer PIN sowie unter Bereitstellung des semantischen Informationsgehaltes 2 wird eine elektronische Signatur 5 erzeugt, die gemeinsam mit dem semantischen Informationsgehalt 2 in eine einheitliche Datenstruktur, dem so genannten Signaturcontainer 6, zusammengefasst wird.

Beim Erstellen der elektronischen Signatur 5 wird über den zu signierenden Inhalt, d.h. über den semantischen Informationsgehalt 2 eine Prüfsumme oder Hashwert gebildet, der der elektronischen Signatur zugrunde liegt. Sind die Hashwertbildung sowie die Signaturerzeugung abgeschlossen, so kann die Übermittlung der auf diese Weise qualifiziert signierten Rechnungsdaten in Form eines Signaturcontainers 6 an einen bestimmten Empfänger erfolgen. Die Übersendung der qualifiziert signierten Rechnungsdaten kann durch eine beliebige dritte Organisationseinheit vorgenommen werden. Zu Zwecken einer Abspeicherung der übersandten Signaturcontainer 6 erfolgt vorzugsweise eine elektronische Archivierung 7 am Ort des Absenders.

Wie bereits eingangs erläutert obliegt die Pflicht zur Integritätsprüfung einer auf elektronischem Wege erhaltenen Rechnung dem Rechnungsempfänger. Da jedoch der Rechnungsempfänger grundsätzlich die Wahlfreiheit zwischen einer traditionellen Papierrechnung und einer elektronischen Rechnung hat, wird der Rechnungsempfänger nur dann bereit sein, elektronische Rechnungen zu akzeptieren, wenn er dadurch nicht Nachteile in Kauf zu nehmen hat. Derartige Nachteile können technischer oder organisatorischer Natur sein, Investitionen bei ihm notwendig machen oder ihn vor Archivierungsproblemen stellen. Nur im Falle, wenn der Rechnungsempfänger Vorteile in der elektronischen Rechnungsübermittlung erkennt, kann der Rechnungsaussteller davon ausgehen, dass die Form der Rechnungserstellung vom Rechnungsempfänger akzeptiert wird und sich die erhofften Einsparungen durch die elektronische Rechnungserstellung in der Praxis auch einstellen.

Um dem Rechnungsempfänger von der gesetzlich festgelegten Verifikationspflicht empfangener elektronischer Rechnungen zu entlasten, bietet es sich an, die elektronisch signierte und elektronisch übermittelte Rechnung vor der endgültigen Zustellung an den Rechnungsempfänger zunächst an einen Verifikationsdienst, einem sogenannten Intermediär 8 zu übermitteln. Die elektronische Übermittlung geschieht, um die Vertraulichkeit der Rechnungsdaten sicherzustellen, vorzugsweise in verschlüsselter Form. Der Intermediär 8 überprüft die elektronische Signatur 5 und erstellt einen zusätzlichen Datensatz 9, in dem das Verifikationsergebnis protokolliert wird. So werden die verwendeten krytographischen Prüfschlüssel und die Gültigkeitsaussagen, beispielsweise im Wege einer OCSP-Statusabfrage, für eine weitere Archivierung bereitgestellt. Bei der Integritätsüberprüfung des als Signaturcontainer 6 vorliegenden digitalen Dokumentes durch den Intermediär 8 wird zudem die Autorisierung der die elektronische Signatur erstellenden Person oder Organisation überprüft. Dies erfolgt typischer Weise durch Kontaktaufnahme zu einem so genannten Trustcenter 10, bei dem der jeweilige Rechnungsaussteller registriert ist und durch Zertifikatsausweisung überprüfbar ist. Da ein Rechnungsempfänger in aller Regel elektronische Rechnungen von einer Vielzahl unterschiedlicher Rechnungsausstellern erhält, gilt es die Zertifikate von unterschiedlichen Trustcentern zu überprüfen, so dass der Intermediär 8 zu einer Vielzahl unterschiedlicher Trustcenter 10 je nach Rechnungsaussteller Verbindung aufnimmt.

Nach erfolgreicher Durchführung der Verifikation bzw. Integritätsprüfung der dem Intermediär 8 zugeleiteten elektronischen Rechnung wird der durch die Prüf- und Archivdaten 9 angereicherte Signaturcontainer 6 auf elektronischem Wege an den Rechnungsempfänger weitergeleitet. Dem Rechnungsempfänger liegen nun alle Prüfdaten einschließlich Zertifikat vom Trustcenter vor, so dass der Rechnungsempfänger bei Bedarf die Prüfung lokal und ohne weitere Online-Abfragen wiederholen kann. Dem Rechnungsempfänger obliegt letztlich die Wahl, die in elektronischer Form vorliegende Rechnung, beispielsweise als lesbares PDF- oder TIFF-Format, in einem elektronischem Archiv 11 abzuspeichern oder über einen Drucker 12 in eine analoge Form überzuführen und entsprechend in einem Archiv 13 zu archivieren.

Ebenso kann die durch den Intermediär 8 an den Rechnungsempfänger zu übersendende Rechnung über Computerfax 14 zugestellt werden, wobei dem Rechnungsempfänger die Rechnung in analoger Form, d.h. in Papierform zugestellt wird. Auch in Form eines Papierausdruckes verbleiben alle im digital vorliegenden Signaturcontainer enthaltenen Informationen, d.h. die elektronische Signatur, die Prüf- und Archivdaten sowie auch der semantische Informationsgehalt, erhalten, wobei die elektronische Signatur sowie die das Verifikationsprotokoll enthaltenen Prüf- und Archivdaten 9 in maschinenlesbarer Form, bspw. als Barcode, auf dem Papierausdruck neben den semantischen Informationen in Form alphanumerischer Zeichen ausgedruckt werden.

Unabhängig von der beim Rechnungsempfänger vorliegenden Form der Rechnung stehen dem Rechnungsempfänger letztlich sämtliche zur Rechnungsinterpretation sowie zum Nachweis für eine selbstständig oder durch einen Dienstanbieter durchführbaren Verifikation erforderlichen Informationen zur Verfügung und dies im Falle einer digital vorliegenden Rechnung innerhalb einer einzigen einheitlichen Datenstruktur, dem sogenannten Signaturcontainer, oder im Falle eines Papierausdruckes in Form auf dem jeweiligen Ausdruck vorgesehenen zumindest maschinenlesbaren Symbolen, wie beispielsweise Barcodes. Auf diese Weise läßt sich die Archivierung durch den Rechnungsempfänger ähnlich einfach gestalten wie bei bisher konventionellen Rechnungen, die auf dem normalen Postweg zugestellt werden.

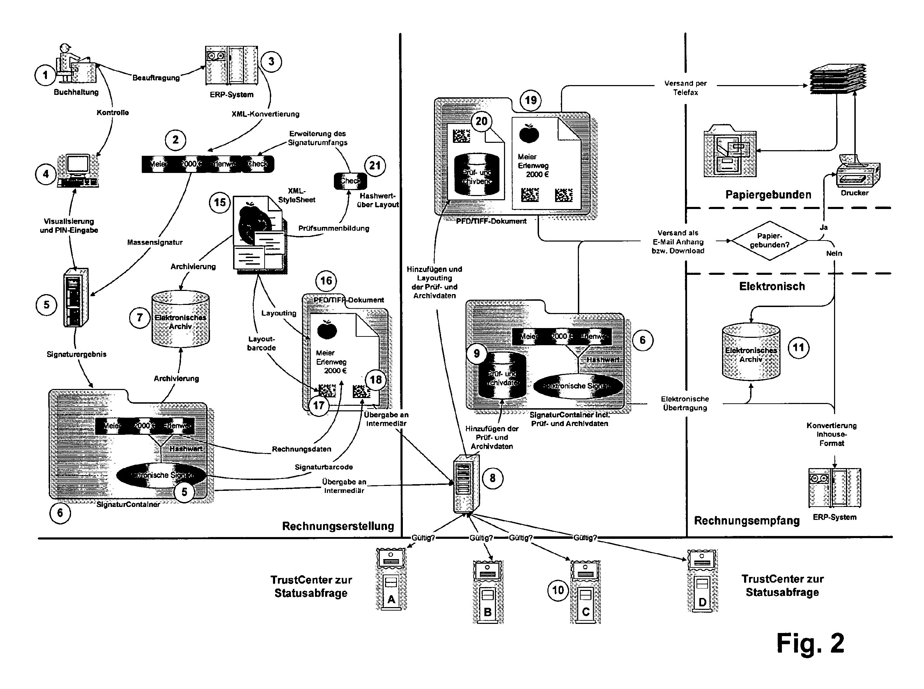

Neben den reinen semantischen Informationen sowie den eingangs erläuterten Informationen bezüglich der elektronischen Signatur sowie des Verifikationsprotokolls sind zum Verständnis und Lesbarkeit des semantischen Informationsgehaltes, den so genannten textuellen Informationen, näher beschreibende Layoutinformationen erforderlich, die sowohl die Art der semantischen Information sowie deren Anordnung zueinander als auch deren optische bzw. gestalterische Wiedergabe näher beschreiben. So sei beispielsweise angenommen, dass die auf elektronischem Wege erstellte Rechnung nach Überführen in Papierform als DIN A4-Ausdruck vorliegt, auf dem an bestimmt vorgegebenen Positionen strukturiert textuelle Rechnungsdaten aufgedruckt sind. Zur Überführung der in digitaler Form vorliegenden Rechnung in Form eines Papierausdruckes ist somit der gesamte semantische Informationsgehalt des Dokumentes mit geeigneten Layoutinformationen zu kombinieren, so dass der Rechnungsausdruck in einer korrekten Weise vorgenommen werden kann. Zur Repräsentation der Layoutinformationen eignen sich beispielsweise die Beschreibungssprache XML, mit der die Erstellung sogenannter XML-Style-Sheets möglich ist, auf der sämtliche Formatierungs- und Beschreibungsinformationen zur korrekten Darstellung des semantischen Informationsgehaltes des Dokumentes enthalten sind. Aus der schematisierten Übersicht in Figur 2 geht die Einbindung und Berücksichtigung der Layoutinformatione, bei einer Rechnungserstellung hervor. Auf die bereits im Ausführungsbeispiel gemäß Figur 1 beschriebenen und mit jeweils gleichen Bezugszeichen versehenen Bearbeitungsschritte 1 bis 7 sei, um Wiederholungen zu vermeiden, verwiesen.

Unter Berücksichtung der Layoutinformationen, die in Form eines XML-Style-Sheets 15 abspeicherbar sind, kann die in digitaler Form vorliegende Rechnung, die in einem Signaturcontainer 6 eingebunden ist, in eine lesbare Form 16, beispielsweise als PDF- oder TIFF-Dokument, überführt werden. Auf der Grundlage der Layoutinformationen ist der semantische Informationsgehalt 2 in geeigneter Weise graphisch, beispielsweise in PDF-Dokumenten darstellbar. Die Layoutinformationen sowie die im Signaturcontainer 6 enthaltene elektronische Signatur 5 wird vorzugsweise jeweils als Barcode in Form eines Layout-Barcodes 17 sowie eines Signatur-Barcodes 18 zur Darstellung gebracht.

Zur Optimierung des Schutzes gegen Manipulation elektronisch signierter digitaler Dokumente wird in vorteilhafter Weise vorgeschlagen, das Erstellen der elektronischen Signatur 5 unter Berücksichtigung des aus den Layoutinformationen abgeleiteten Layout-Barcodes 17 zu erstellen. Hierbei wird über den Layout-Barcode eine Prüfsumme 21, ein so genannter Hashwert, gebildet, der gemeinsam mit wenigstens Teilen des semantischen Informationsgehaltes 2 zur Ermittlung der elektronischen Signatur 5 verwendet wird. Durch diese Vorgehensweise ist der Layout-Barcode 17 untrennbar mit dem semantischen Informationsgehalt 2 und damit verbunden mit der elektronischen Signatur 5 verknüpft. Wie im Weiteren noch im Einzelnen ausgeführt wird, können hierdurch Manipulationen am Layout-Barcode 17 bzw. durch eine falsche Zuordnung der semantischen Informationen 2 im Wege einer Signaturüberprüfung aufgedeckt werden.

Das in der vorstehenden Weise mit einer elektronischen Signatur 5 signierte digitale Dokument, das nunmehr in Form eines Signaturcontainers 6 vorliegt, in dem neben dem semantischen Informationsgehalt 2 sowie der elektronischen Signatur 5 zusätzlich die Layoutinformationen in Form eines Layout-Barcodes enthalten sind, wird im Ausführungsbeispiel gemäß Figur 1 einem Intermediär 8 zur Integritätsprüfung zugeleitet. Wie im Ausführungsbeispiel gemäß Figur 1 führt der Intermediär 8 unter entsprechender Kommunikation mit einem jeweiligen Trustcenter 10 die Verifikation der erstellten elektronischen Signatur 5 durch und erstellt einen Prüf- und Archivdatensatz 9, in dem das Verifikationsprotokoll abgespeichert ist. Je nach empfängerseitigem Bedarf besteht die Möglichkeit, die Rechnung in digitaler Form, d.h. im Rahmen eines Signaturcontainers 6, der zusätzlich zu den vorstehend genannten Komponenten die Prüf- und Archivdaten 9 enthält, oder in einer lesbaren Form, beispielsweise als PDF- oder TIFF-Dokument 19 auszugeben, das ebenfalls die Prüf- und Archivdaten, vorzugsweise als strukturierten Text und/oder als maschinenlesbarer Barcode 20 enthält.

Beide Formen des verifizierten Dokumentes können auf elektronischem Wege über E-Mail für eine weitere Abspeicherung in ein elektronisches Archiv 11 oder über Telefax 14 dem Rechnungsempfänger übermittelt werden.

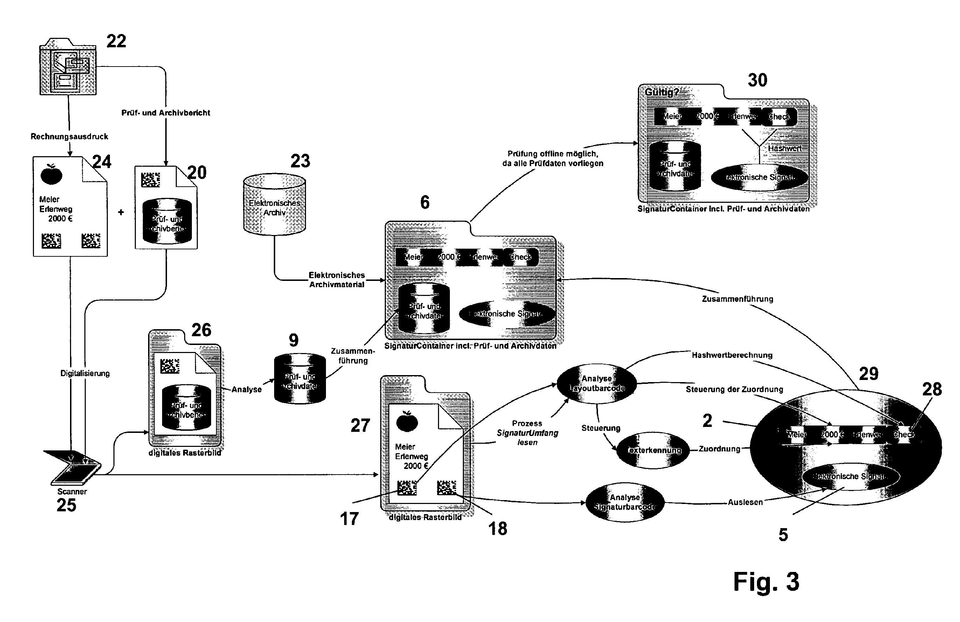

Figur 3 zeigt ein Überprüfungsschema, an Hand dem ein Empfänger einer elektronisch an ihn übermittelten, in der vorstehenden Weise signierten Rechnung eine Gültigkeitsüberprüfung der Rechnung vornehmen kann.

Je nach Ablagegewohnheit des Empfängers ist es dem Empfänger überlassen, eine auf elektronischem Wege erhaltene Rechnung entweder in analoger Form, bspw. als Papierausdruck in einem Aktenschrank 22 oder in Form eines digitalen Dokumentes im Rahmen eines elektronischen Archivs 23 zu archivieren. Im Falle der Rechnungsaufbewahrung in Papierform liegen dem Empfänger der Rechnungsausdruck 24 mit Rechnungstext sowie dem maschinenlesbaren Layoutbarcode 17 sowie dem Signaturbarcode 18 vor. Ferner liegt der ebenfalls als Papierausdruck vorliegende Prüf- und Archivbericht 20 vor, der vorzugsweise als maschinenlesbarer Barcode codiert ist. Wunschgemäß kann der Prüf- und Archivbericht 20 gemeinsam auf dem Rechnungsausdruck 24 an einer geeigneten Stelle aufgebracht sein.

Zur weiteren Verarbeitung werden die analogen Papierausdrucke 24 und 20 mit einem handelsüblichen Scanner 25 in jeweils ein digitales Rasterbild überführt, nämlich ein dem Prüf- und Archivbericht 20 zuordenbares digitales Rasterbild 26 sowie dem Rechnungsausdruck 24 entsprechendes digitales Rasterbild 27. Aus dem digitalen Rasterbild 26 werden die Prüf- und Archivdaten 9 rekonstruiert und in einen Signaturcontainer 6 überführt. In gleicher Weise wird das digitale Rasterbild 27 analysiert und zu Zwecken der Datenrekonstruktion bearbeitet. Im Einzelnen erfolgen ein Auslesen der im Signaturbarcode 18 enthaltenen elektronischen Signatur 5 und eine entsprechende Analyse derselben. Darüber hinaus wird unter Zugrundelegung des Layoutbarcodes 17 der Hashwert 28 berechnet und als Prüfsumme 28 dem rekonstruierten semantischen Informationsgehalt 2 hinzugefügt. Der semantische Informationsgehalt 2 wird unter Zugrundelegung der Layoutinformationen sowie einer OCR-Texterkennung aus dem digitalisierten Rasterbild 27 in ihre ursprüngliche digitale Form überführt und wie vorstehend erwähnt, mit der Prüfsumme 28 sowie der elektronischen Signatur 5 in eine einheitliche Datenstruktur 29 zusammengeführt, die letztlich in den Signaturcontainer 6 gemeinsam mit den Prüf- und Archivdaten 9 überführt wird. Der Signaturcontainer 6 enthält letztlich sämtliche Informationen und Prüfdaten, die eine Überprüfung 30 der Rechnungsdaten auf Gültigkeit ermöglichen.

Liegen hingegen beim Rechnungsempfänger die Rechnungsdaten in rein digitaler Form vor, so befinden sich die Rechnungsdaten typischerweise in einem elektronischen Archiv 23, in dem pro Rechnung ein Signaturcontainer 6 abgespeichert ist, der unmittelbar einer entsprechenden On- oder Off-Line-Prüfung 30 zugeführt werden.

Der in Figur 3 dargestellte, rekonstruierte elektronische Standardrechnungscontainer 6 entspricht somit einem rechtsgültigen Nachweis für die Echtheit eines mit einer elektronischen Signatur versehenen Rechnungsausdruckes oder Rechnung, da bei der Erstellung des Signaturcontainers 6, also vor Abspeichern der Signaturinformationen auf Papier oder in einem elektronischen Archiv 23 ein qualifiziertes elektronisches Signaturverfahren angewandt worden ist, wie vorstehend beschrieben, das sämtliche anzuwendenden gesetzlich vorgeschriebenen Formvorschriften erfüllt.

### Bezugszeichenliste

- 1: Rechnungserstellung
- 2: semantische Information
- 3: System zur Bereitstellung der Rechnungsinformationen
- 4: Eingabeeinheit für einen Signaturschlüssel (PIN)
- 5: Erzeugung einer elektronischen Signatur
- 6: Signaturcontainer
- 7: elektronisches Archiv
- 8: Intermediär
- 9: Prüf- und Archivdaten
- 10: Trustcenter
- 11: elektronisches Archiv
- 12: Drucker
- 13: Papierarchiv
- 14: Telefaxverbindung
- 15: XML-Style-Sheet
- 16: lesbares Dokument, z. B. PDF- oder TIFF-Dokument
- 17: Layout-Barcode
- 18: Signatur-Barcode
- 19: lesbares Dokument
- 20: Prüf- und Archivbericht
- 21: Prüfsumme über Layoutbarcode
- 22: Aktenschrank
- 23: elektronisches Archiv
- 24: Rechnungsausdruck
- 25: Scanner
- 26, 27: digitale Rasterbilder
- 28: Prüfsumme, Hashwert
- 29: Datenstruktur
- 30: Gültigkeitsüberprüfung

## Patentansprüche

1. Verfahren zum Dokumentieren wenigstens einer Verifikation, die an einem mit einer elektronischen Signatur versehenen Dokument, das in digitaler oder analoger Form vorliegt und einen semantischen Informationsgehalt aufweist, durchgeführt wird,
wobei die elektronische Signatur sowie der semantische Informationsgehalt des Dokumentes in eine digitale Datenstruktur zusammengefasst werden, die der Verifikation unterzogen wird, bei der ein Verifikationsprotokoll erstellt wird, das der digitalen Datenstruktur hinzugefügt wird.

2. Verfahren nach Anspruch 1,
**dadurch gekennzeichnet, dass** das Verifikationsprotokoll in einer Prüf- und Archivdatei abgespeichert wird, die der Datenstruktur hinzugefügt wird.

3. Verfahren nach Anspruch 1 oder 2,
**dadurch gekennzeichnet, dass** die elektronische Signatur über wenigstens einen Teil der semantischen Information gebildet wird.

4. Verfahren nach einem der Ansprüche 1 bis 3,
**dadurch gekennzeichnet, dass** die elektronische Signatur, der semantische Informationsgehalt sowie das Verifikationsprotokoll jeweils in einer lesbaren Form in der Datenstruktur dargestellt wird.

5. Verfahren nach Anspruch 4,
**dadurch gekennzeichnet, dass** als lesbare Form eine Darstellung gewählt wird, die mittels Barcode-, Wasserzeichen- oder OCR-Technik lesbar ist.

6. Verfahren nach Anspruch 4,
**dadurch gekennzeichnet, dass** die elektronische Signatur und/oder die Prüf- und Archivdatei als 2D-Barcode dargestellt wird.

7. Verfahren nach einem der Ansprüche 1 bis 6,
**dadurch gekennzeichnet, dass** die elektronische Signatur unter Verwendung eines Signaturschlüssels erstellt wird, und
dass zum Nachweis über eine autorisierte Erstellung der elektronischen Signatur ein Zertifikat erstellt wird, das der elektronischen Signatur hinzugefügt und bei der Verifikation überprüft wird.

8. Verfahren nach einem der Ansprüche 1 bis 7,
**dadurch gekennzeichnet, dass** als digitale Datenstruktur ein Signaturcontainer, vorzugsweise ein PKCS#7 Container, verwendet wird.

9. Verfahren nach einem der Ansprüche 1 bis 7,
**dadurch gekennzeichnet, dass** als digitale Datenstruktur eine lesbare, ausdruckbare Dokumentenstruktur, vorzugsweise eine PDF- oder TIFF-Datei, verwendet wird.

10. Verfahren nach einem er Ansprüche 1 bis 9,
**dadurch gekennzeichnet, dass** die semantische Information nach Art, Anordnung und/oder optischem Erscheinungsbild beschreibende Darstellungsdaten, eine so genannte Layoutinformation, der digitalen Datenstruktur zugefügt werden.

11. Verfahren zur Erzeugung eines gegen Manipulation geschützten, wenigstens mit einer elektronischen Signatur versehenen, wenigstens eine lesbare semantische Information enthaltenden, lesbaren analogen oder digitalen Dokumentes, **gekennzeichnet durch** folgende Verfahrensschritte:
- Erzeugen von die semantische Information nach Art, Anordnung und/oder optischem Erscheinungsbild beschreibenden Darstellungsdaten,
- Kodieren von wenigstens Teilen der Darstellungsdaten unter Bildung eines so genannten Layoutcodes sowie Integrieren des Layoutcodes in das Dokument,
- Erstellen der elektronischen Signatur auf Basis von wenigstens Teilen der semantischen Information sowie wenigstens Teilen des Layoutcodes und Integrieren der elektronischen Signatur in das Dokument.

12. Verfahren nach Anspruch 11,
**dadurch gekennzeichnet, dass** die Darstellungsdaten in Form eines XML-basierten Dokumentenschemas oder DTD (Dokumenten Typ Definitionen) beschrieben werden.

13. Verfahren nach Anspruch 11 oder 12,
**dadurch gekennzeichnet, dass** der Layoutcode als 2D-Barcode codiert und in Form eines lesbaren Layoutbarcodes in das Dokument integriert wird.

14. Verfahren nach Anspruch 11 oder 13,
**dadurch gekennzeichnet, dass** auf Basis des Layoutcodes ein Hashwert gebildet wird, der gemeinsam mit wenigstens Teilen der semantischen Information zur Erstellung der elektronischen Signatur herangezogen wird.

15. Verfahren nach Anspruch 11 oder 13,
**dadurch gekennzeichnet, dass** über den Layoutcode eine weitere elektronische Signatur gebildet und in das Dokument integriert wird.

16. Verfahren nach einem der Ansprüche 11 bis 14,
**dadurch gekennzeichnet, dass** die elektronische Signatur, die lesbare semantische Information sowie der Layoutcode in einer gemeinsamen Datenstruktur zusammengefasst werden.

17. Verfahren nach Anspruch 16,
**dadurch gekennzeichnet, dass** als gemeinsame Datenstruktur ein so genannter Signaturcontainer, vorzugsweise ein PKCS#7 Container, verwendet wird.

18. Verfahren nach Anspruch 16,
**dadurch gekennzeichnet, dass** das als gemeinsame Datenstruktur eine lesbare, ausdruckbare Dokumentenstruktur, vorzugsweise eine PDF- oder TIFF-Datei, verwendet wird.
